# EUROPEAN PATENT APPLICATION

(11) **EP 0 918 420 A2**
(43) Date of publication of application: **26.05.1999**
(21) Application number: 98309536.5
(22) Date of filing: 20.11.1998
(51) Int. Cl.: H04L 12/58, H04L 12/28, H04Q 7/22

(54) **Wireless data transfer method and system**

(30) Priority: 21.11.1997 JP 321250/97
(71) Applicant: NEC CORPORATION, Tokyo (JP)
(72) Inventor: Niwa, Yushi, c/o NEC Home Electronics, Ltd., Osaki-shi, Osaka (JP); Matsumoto, Hidehiro, c/o NEC Corporation, Tokyo (JP)
(74) Representative: Orchard, Oliver John

(57) **Abstract**

The invention provides a method for sending/receiving digital data between terminals via a central apparatus by using a wireless transmission network.

A source terminal sends only a mail header including attribution information of the digital data to the central apparatus and a destination terminal receives the digital data from the source terminal only when the digital data is determined to be necessary by referring to the mail header in the central apparatus. A recipient of data is able to reduce unnecessary communication costs and to save storage resources in the central apparatus and in the system.

## Description

This invention relates to a wireless data transfer method and system. A particular, electronic mail system communication system, which sends/receives digital data between a plurality of terminals through a wireless transmission network in a network computer system will be described in this specificiation by way of example in illustration of the invention.

A wide variety of communication systems has previously been proposed to send/receive digital data between a plurality of wireless terminals in a wireless computer network which is controlled by a computer network.

A mail sending/receiving system will be described below, by way of example, as representative of such previously proposed communication systems.

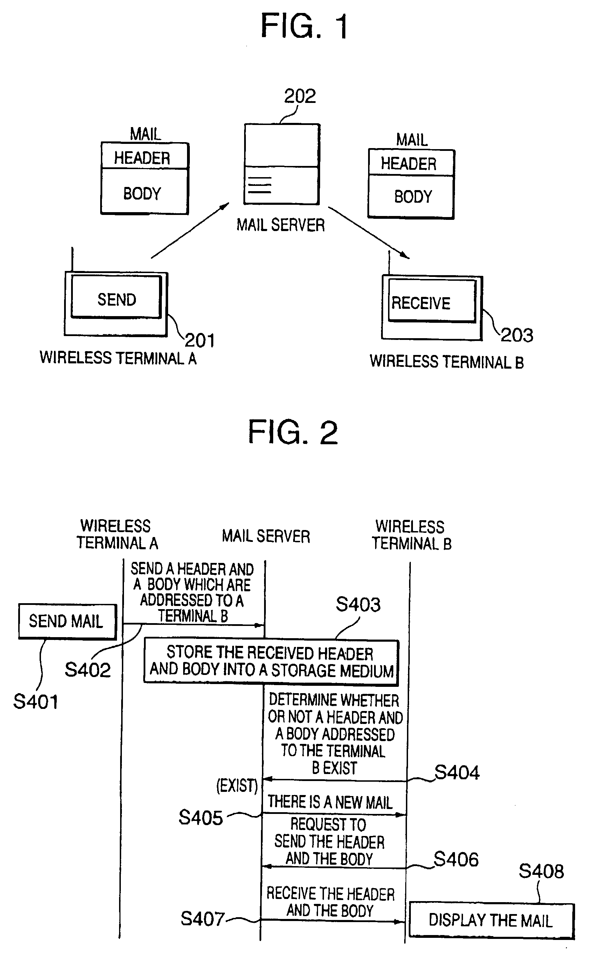

Previously proposed mail sending/receiving systems will now be described with reference to Figs. 1 and 2 of the accompanying drawings in which Fig. 1 is a diagrammatic block diagram for use in describing a mail sending/receiving system, and Fig 2 is a flow diagram based on a protocol used for sending/receiving mail or mail data in each of two previously proposed mail sending/receiving systems.

Referring to Figs. 1 and 2, the description will first be directed to a first one of two previously proposed mail sending/receiving systems.

It will be assumed that a mail (mail data) includes a mail header and a body of mail. When a wireless terminal is used for an electronic mail system in a LAN (local area network) through a wireless communication network (for example, a mobile radio telephone network), a wireless terminal A 201 sends a mail header and a mail body addressed to a wireless terminal B 203 to a mail server 202 in the same time (S402). Next, the mail server 202 stores the mail header and the mail body which are received (S403). The wireless terminal B 203 can connect to the mail server 202 at anytime, and when the wireless terminal B 203 determines that the mail header and/or the mail body addressed to it exist in the mail server 202 (S404, S405), it receives the mail header and/or the mail body from the mail server 202 (S406, S407). A wireless electronic mail receiving system which has been disclosed in Japanese Laid Open Publication No. H08-139747 is similar in structure to the first one of the previously proposed systems.

One problem, in a mail sending/receiving system such as the first one of the systems, is that a recipient of mail cannot know the contents of the mail message until a wireless terminal B completes the receipt of a mail header and a body of the mail. In other words, when a recipient wants to know the contents of a mail message, a wireless terminal B should receive both a mail header and a body from the mail server. Even if the recipient does not need the mail or does not want to receive the mail, the mail header and the body of the mail are transferred to the wireless terminal B. Consequently, during the transfer, in which a wireless transmission network is used as the transmission medium, the recipient will be charged according to the duration of use of the transmission network.

Such a problem becomes serious when the size of the mail header for each mail is small (for example, the size is about 10 to 100 bytes) and the size of the body of the mail for each mail message is large. For example, a transmission time of about 14 minutes may be needed for the transfer when the size of the body of the mail is as long as 1 megabytes, if the transmission is carried out from a standard communication device which has a transmission rate of 9,600 bits per second (1 byte = 8 bits). The above transmission time is measured on the assumption that disconnection neither takes place due to interference during the transmission time executed by the recipient nor due to any repeated retry operation.

When a disconnection occurs during the reception of the body of the mail, the reception operation has to be repeated by the recipient. The probability of the occurrence of radio-frequency interference, which is one of the reasons for disconnection, is generally constant over the whole transfer time. However, during successive data transmissions, as the data size becomes large, the probability of the occurrence of a radio-frequency interference becomes higher during transmission. As a result, the recipient often wastes money when the network is used for providing the service of a network connection service provider during the transmission time.

In a system, such as the first one of the previously proposed systems, when a sender sends a great deal of mail information to a large number of recipients in the form for example of advertising direct mail, some or most of the recipients might neither need the information in the mail message nor want to see the mail. This brings about not only a serious economic loss, but also wastes a network resource.

On the contrary, when a body of the mail of about 1,000 to 5,000 bytes is received, the recipient does not suffer an economic loss, since the cost for the receipt of such a short body of mail is as small as the cost of the receipt of the mail header.

It is assumed that an accounting operation is carried out at six second intervals, while a mail header and a mail body of 5,000 bytes are received for one second and five seconds, respectively. In these circumstances, a recipient receiving only a mail header, will pay charges for using the network for six seconds although he or she uses the network only for one second. On the other hand, when the recipient receives both the mail header and the mail body, the recipient will also pay charges for using the network for six seconds. In the later case, the recipient does not pay any extra money, since it takes just six seconds to receive both the mail header and the mail body.

Next, a second previously proposed system will be described with reference to Figs. 1 and 2.

The second previously proposed system functions in the same way as the mail sending/receiving method described above with reference to Fig. 1. In the second previously proposed system, a wireless terminal A 201 sends a communuication including a mail header and a mail body to a mail server 202. Next, when a wireless terminal B 203 receives the communication, the wireless terminal B 203 receives only the mail header. If a user who receives the mail header determines that the mail is necessary it is arranged that the wireless terminal B 203 receives the remaining body of the mail.

In the second previously proposed system, when it is not necessary for the wireless terminal B 203 to receive the body of the mail, it can instruct the mail server 202 to delete the body of the mail in the mail server 202. Therefore, the second previously proposed system can reduce traffic in a transmission network between the mail server 202 and the wireless terminal B 203 by eliminating the need to transfer unnecessary mail data between them. This is one of the merits in the second previously proposed system, compared to the first previously proposed system. An electronic mail delivery system which has been disclosed in Japanese Laid-Open Publication No. H04- 236541 is similar to the second previously proposed system mentioned above.

Here, for the sake of clarify, it is assumed that the wireless terminal A 201 sends a mail message and the wireless terminal B 203 receives the mail message in the above description. However, it is readily understood that the wireless terminal B 203 is also able to send a mail message to the wireless terminal A 201 by exchanging the functions of the above two terminals.

The second previously proposed system can overcome the problem of the first previously proposed system to some extent.

In the second system, the wireless terminal B at first receives only a mail header on the receipt of the mail information from the mail server. The recipient is then able to determine whether or not it is necessary to receive the body of the mail by referring to the size of the body of the mail, the title, and so on included in the mail header. Therefore, the recipient is able to select only the necessary mail information to be received and may pay a reduced fee compared to that when using the first previously proposed system.

However, the second previously proposed system is not able to cope well with a large number of mail messages. Specifically, when a wireless terminal A simultaneously sends to a plurality of destinations, for example to over 1,000 terminals, mail information including a plurality of mail communications each of which includes a mail header and a body of mail similar to one another, all of the storage regions in a mail server will be occupied by the mail headers and the mail bodies, because all of the mail headers and the mail bodies which are produced in the wireless terminal A are sent at once to the mail server.

This situation may occur when a large amount of commercial direct mail is produced and transmitted by automatically replacing only destinations and the recipient's names in the mail header. All of the wireless terminals, each of which corresponds to a destination of a mail communication, will not immediately receive or have deleted the mail headers. In other words, the wireless terminals are able individually to receive or to delete them in each period of time assigned to each of the corresponding recipients.

When a large amount of mail information is simultaneously sent to a mail server, as mentioned before, all of the mail information, or a part of the mail, will be received in the mail server and kept in the mail server for a long time. As a result, the storage resource in the mail server is wasted.

Furthermore, the second previously proposed system has another disadvantage. For example, let the wireless terminal A in this system send a large number of mail headers and mail bodies to a plurality of destinations, such as over 1,000 terminals as in the above-mentioned case. In these circumstances, all of the mail headers and mail bodies will be stored in the mail server through the wireless transmission network between the wireless terminal A and the mail server. Furthermore, when the wireless terminals B, each of which corresponds to one of the destinations, receive the corresponding mail communication (including a mail header and a mail body), the mail is sent through a wireless transfer network between the mail server and the receiving wireless terminal, similar to when it is stored in the mail server.

Therefore, providing that a mail header and a mail body which are sent by the wireless terminal A are received by the wireless terminal B in a mail sending/receiving system of both the first and the second previously proposed systems, the mail header and the mail body will occupy the wireless transmission network twice, i.e. on transmission and reception of the mail.

For example, when the body of the mail is less than or equal to 5,000 bytes in size, there is no problem with regard to the occupation of the memory. However, when the body of the mail is large in size, the memory resource in the whole mail system is largely occupied.

A suitable wireless terminal device is disclosed in Japanese Laid-Open Publication No. H07-183824. In this wireless terminal device, wireless terminals (A and B) are turned on only when the wireless terminals are automatically communicating with each other. They are turned off when the communication has been completed. This arrangement is useful for saving the power of the batteries in the wireless terminals.

However, power in the batteries is still wasted because each wireless terminal is activated and connected to the mail server for communication, even if no information for simultaneous communication is present in both the mail server and each wireless terminal.

Features of a method and system to be described below, by way of example in illustration of the invention are that it is possible to reduce the fees that would otherwise be incurred in the unnecessary receipt of information, to reduce the resources of both a wireless transmission network employed throughout a system and centrally arranged storage resources (server), to suspend communication automatically according, for example, to any degradation in the quality of a wireless network, or as a result of requests by a user, and to restart the communication automatically, so as to achieve data transmission without fail, and to save the power of a battery in a wireless terminal.

In a particular arrangement to be described, by way of example in illustration of the invention, there is a method of sending/receiving digital data between terminals via a central apparatus using a wireless transmission network, the method includes the steps of sending a mail header having attribution information from a source terminal to a central or common apparatus, for example a server, and receiving the digital data at a destination terminal from the source terminal when it is determined that the digital data should be received as a result of a reference to the mail header in the central or common apparatus.

The attribution information of the digital data may include information such as an ID identifying the source terminal, the size of the digital data, the title of the digital data, and an ID identifying the digital data.

The following description, made with reference to Figs. 3 to 15 of the drawings, discloses, by means of examples, the invention which is characterised in the appended claims, whose terms determine the extent of the protection conferred hereby.

In the drawings:-
Fig. 3 shows schematically a block diagram of a mail sending/receiving system,
Fig. 4 shows a time chart for use in describing a method of operation based on a protocol used for the sending/receiving system illustrated in Fig. 3,
Fig. 5 shows schematically a chart for use in describing a processing protocol in one embodiment,
Fig. 6 shows a chart for use in describing a variation in a processing protocol,
Fig. 7 is a flow diagram for use in describing a protocol for sending a mail header,
Fig. 8 is a flow diagram for use in describing a protocol for receiving a mail header,
Fig. 9 is a flow diagram for use in describing a protocol for receiving a body of mail,
Fig. 10 is a block diagram illustrating a wireless terminal A,
Fig. 11 is a block diagram illustrating a mail server,
Fig. 12 is a block diagram illustrating a wireless terminal B,
Fig. 13 shows schematically header information,
Fig. 14 shows schematically access status information, and
Fig. 15 shows schematically divisions in a body of mail.

Referring to the accompanying drawings,

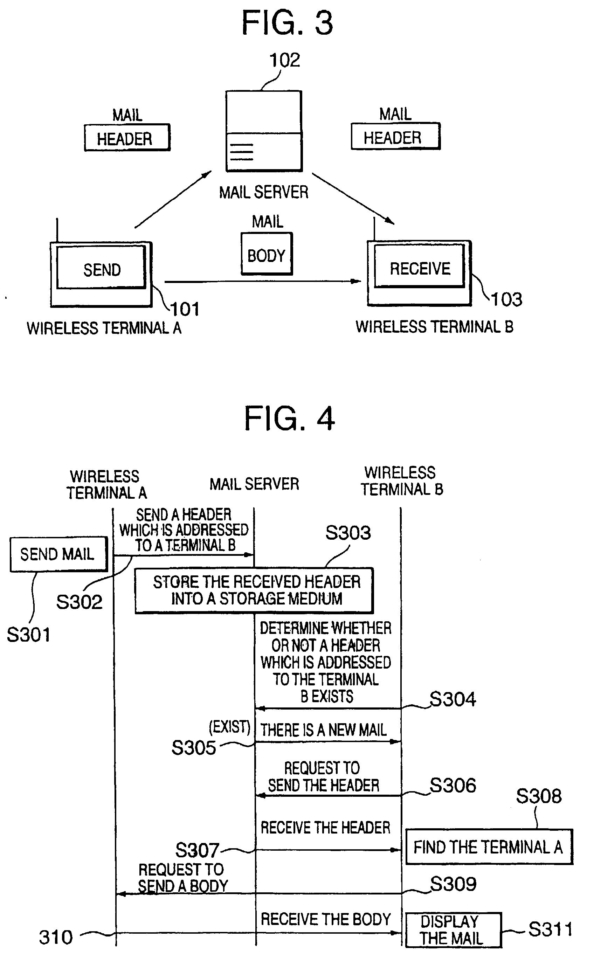

Fig. 3 shows schematically a communication system, namely, a sending/receiving system, of one embodiment illustrative of the invention. For convenience of explanation, it is assumed that the illustrated sending/receiving system is used to send/receive electronic mail (simply called mail hereinafter) and to carry out wireless data transfer or wireless data communication and that the mail has a mail header and a body of mail referred to as a mail body. It will be understood that the arrangement being described can be also applied to other file transfer systems among a plurality of wireless terminals.

In the sending/receiving system shown in Fig. 3, it is to be noted that a wireless terminal A 101 sends only a mail header to a mail server 102 when mail produced in the wireless terminal A 101 is to be sent to a wireless terminal B 103. Furthermore, the wireless terminal B 103, after receiving the mail header from the mail server 102, directly receives a mail body corresponding to the mail header from the wireless terminal A 101.

The system will be described in more detail with reference to Fig. 4 which illustrates a procedure based on a protocol used in the sending/receiving system.

At first, the wireless terminal A 101 generates mail (S3O1) to be sent to the wireless terminal B 103 (S301). In this event the wireless terminal A 101 sends only a mail header of the mail to the mail server 102 (S302). Then, the mail server 102 stores the mail header in a memory (S308). Next, the wireless terminal, namely, a receiving terminal B 103 accesses the mail server 102 and determines whether or not a mail header addressed to the terminal B 103 is stored in the mail server 102 (S304).

If a mail header addressed to the wireless terminal B 103 is present in the mail server 102, the mail server 102 notifies the wireless terminal B 103 of the existence of the mail header (S305). The wireless terminal B 103 requests the mail server 102 to send the mail header to the wireless terminal B 103 in response to the notification (S306). The mail server 102 sends the mail header to the wireless terminal B 103 in response to the request (S307). Consequently, the wireless terminal B 103 can find that a source terminal of the mail header is the wireless terminal A 101 by referring to the contents of the mail header (S308). Then, the wireless terminal B 103 is connected to the wireless terminal A 101, and the wireless terminal A 101 is requested to send a mail body, corresponding to the mail header which has just been received, to the wireless terminal B 103 (S310). The wireless terminal A 101 sends the mail body to the wireless terminal B 103 in response to the request.

By the series of steps described above, the wireless terminal B 103 is able to store the mail body in its own memory or storage, and to display the mail body to the user of the wireless terminal B 103 (S311).

In the arrangement described in this specification, the wireless terminal A 101 sends mail, and the wireless terminal B 103 receives the mail for the convenience of explanation. However, even if the wireless terminal B 103 sends mail to the wireless terminal A 101, both of the wireless terminals B 103, A 101 can be operated as appropriate as the sending and the receiving terminals, respectively, by exchanging function of each wireless terminal.

Next, various elements will be described in particular.

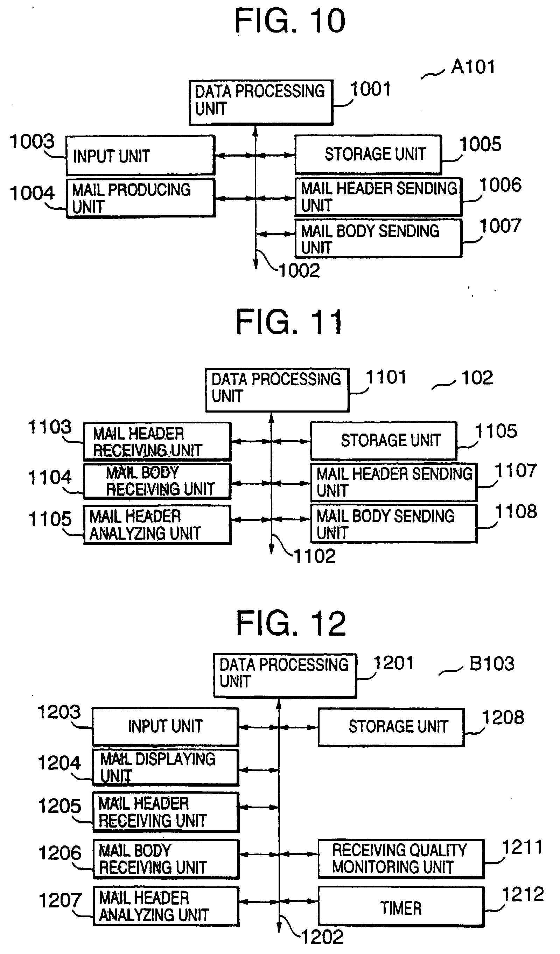

The wireless terminal A 101 shown in Fig. 1 can be configured as shown in Fig. 10 and may be similar in structure to B 103, although the description will be restricted to the wireless terminal A 101 alone. The wireless terminal A 101 includes a data processing unit 1001 which is connected to each unit described below via a bus 1002 and which controls the units. Among the units, a mail producing unit 1004 is used to draft and edit mail by a user, while a storage unit 1005 stores the mail which is produced, or which is being produced. In addition, an input unit 1003 is operable to receive an instruction for sending the mail from the user, while a mail header sending unit 1006 serves to read mail from the storage unit 1005, in response to an instruction for sending the mail from a user, and to send a mail header for the mail to a mail server 102 by the use of a wireless transmission network. Furthermore, a mail body sending unit 1007 serves to send a mail body to a mail server, or to a wireless terminal, which can be connected to the wireless terminal A 101 via a wireless transmission network, and which is indicated as a receiving address. The mail body sending unit 1007 is able to divide mail body into parts or pieces and to send the parts or pieces, when the size of the mail body exceeds a predetermined size, as required.

The mail server 102 shown in Fig. 3 is structured in the manner shown in Fig. 11. The mail server 102 includes a data processing unit 1101 which is connected to each unit described below via a bus 1102 and controls the units. The illustrated mail server 102 includes, as the units, a mail header receiving unit 1103 which receives a mail header from a wireless terminal A 101 via a wireless transmission network, a mail body receiving unit 1104 which receives a mail body from a wireless terminal A 101 via a wireless transmission network, a storage unit 1106 which stores a mail header and a mail body which is received, a mail header analysing unit 1105 which reads the received mail header from the storage unit 1106 and compares contents in the mail header with any conditions, a mail header sending unit 1107 which sends a mail header using a wireless transmission network to a wireless terminal B 103 in response to a request from the wireless terminal B 103, and a mail body sending unit 1108 which sends a mail body to a wireless terminal B 103.

The wireless terminal B 103 shown in Fig. 1 can be designed in the way shown in Fig. 12. The wireless terminal B 103 includes a data processing unit 1201 which is connected to each unit described below via a bus 1202 and which controls the units. In addition, the illustrated wireless terminal B103 includes, as the units, a mail header receiving unit 1205, which determines whether or not a mail header addressed to the wireless terminal B 103 exists in the mail server 102 and which receives the mail header via a wireless transmission network according to the existence of a mail header in the mail server 102, and a mail body receiving unit 1206 which receives the mail body corresponding to the mail header via a transmission network from the mail server 102, or from a wireless terminal which can be connected to the wireless terminal B 103, and which is indicated by a sending address. Moreover, the illustrated wireless terminal B 103 further includes a storage unit 1208 which stores the received mail header and the mail body, a mail header analysing unit 1207 which obtains header information, such as a sending address or the size of the mail body from the received mail header, a timer 1212 which times the duration of a message and notifies the data processing unit 1201 of the passage of time by using an interrupt, a mail displaying unit 1204 which displays the received mail header and the mail body to a user, and an input unit 1203 which receives an instruction to operate from a user, and a receiving quality monitoring unit 1211, which monitors the status of a battery for data receiving and of a radio wave.

Furthermore, the receiving quality monitoring unit 1211 monitors a receiving quality which is specified by a difference, a check-sum derived from data received in receiving a mail body and a check-sum appended to the received data. In the illustrated receiving quality monitoring unit 1211, the status of the power is monitored by detecting whether or not a power supply voltage of the wireless terminal B 103 is lower than a certain threshold voltage and the radio field intensity is also monitored by detecting whether or not the intensity of the receiving radio wave is below a certain threshold intensity. Here, a check-sum, for example, means the value of a least significant byte of a summation obtained by adding all bytes in a length of the data flow.

The mail body receiving unit 1206 can treat data sent in the form of a plurality of divided mail data as a mail body by concatenating a plurality of divided mail data after their receipt.

The mail header sending unit (1006, 1107) and the mail body sending unit (1007, 1108) generally cooperate with a communication device such as a modem to transfer data based on a conventional lower layer communication protocol, which has been defined by a known protocol, such as PPP (point to point protocol) RFC 1331: (RFC = Request for Comment)). Therefore, a more detailed description of the basic function will be omitted.

The description has thus far been made with regard to the sending of a mail header, the contents of the mail header, or where the mail header is sent. Similar descriptions will be true of the mail body.

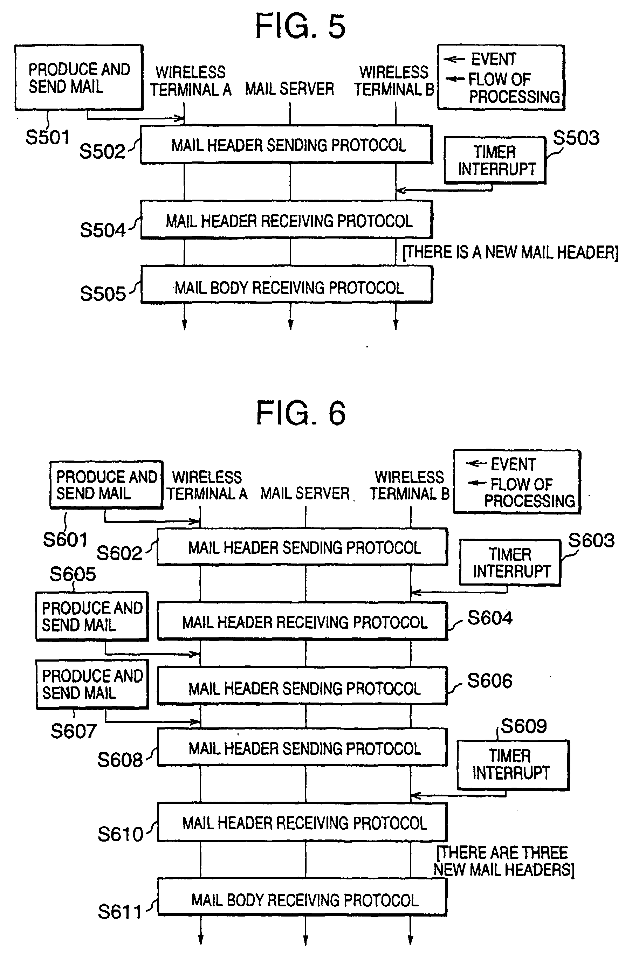

The method of operation of the system will now be described with reference to Figs. 3 and 6, based on a particular processing protocol. As shown in Fig. 3, it is assumed that the wireless terminal A 101 sends the mail to the wireless terminal B 103 and the mail server 102 is between the wireless terminal A 101 and the wireless terminal B 103.

As shown in Fig. 5, firstly, the wireless terminal A 101 produces mail from a user and sends it to the mail server 102 (S501). Next, the wireless terminal A 101 commences a procedure which is based on the mail header sending protocol (S502) between the wireless terminal A 101 and the mail server 102, assuming that the mail server 102 is connected to the wireless terminal A 101. In the procedure based on the mail header sending the protocol (S502), a mail header in the mail to be sent to the wireless terminal B 103 is sent from the wireless terminal A 101 to the mail server 102, and the wireless terminal A 101 notifies the mail server 102 that the wireless terminal A 101 stores a mail body in the mail addressed to the wireless terminal B 103.

After completion of the mail header sending protocol (S502), the wireless terminal B 103 begins to connect to the mail server 102 by responding to a trigger signal, such as timer interrupt signal (S503), and starts the procedure which is based on a mail header receiving protocol (S504) so as to determine whether or not a mail header addressed to the wireless terminal B 103 exists in the mail server 102. Here, if the wireless terminal B 103 receives the mail header from the mail server 102, the wireless terminal B 103 detects a new mail (header) addressed to the wireless terminal 103.

When the new mail header addressed to the wireless terminal B103 in the mail server 102 is detected in accordance with the procedure based on the mail header receiving protocol (S504), the wireless terminal B 103 immediately starts the procedure which is based on a mall body receiving protocol (S505).

However, as shown in Fig. 6, even if the wireless terminal A 101 finds that there is a mail header addressed to the wireless terminal B 103 in the mail server 102 by using a procedure based on a mail header receiving protocol (S604), the wireless terminal A 101 may not immediately start the procedure which is based on a mail body receiving protocol (S611). For example, as shown in Fig. 6, the wireless terminal A 101 may start the procedure which is based on the mail body receiving protocol (S611) on any condition such as when three new mail headers have been received.

In Fig. 5, the wireless terminal B 103 finds a new mail header addressed to wireless terminal B 103 in the mail server 102 by using the procedure which is based on the mail header receiving protocol (S504). After that, the wireless terminal B 103 immediately receives a mail body corresponding to the new mail header from the wireless terminal A 101 or from the mail server 102 by using the procedure which is based on the mail body receiving protocol (S505).

Procedures based on each protocol will now be described.

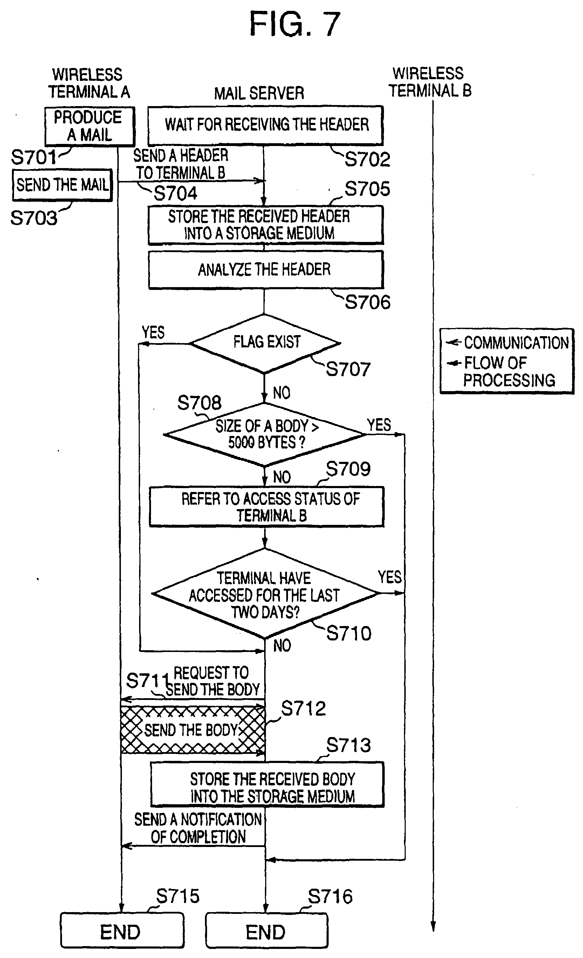

More detailed description about the procedure based on the mail header sending protocol (S502) will be made with reference to Fig. 7 which shows the procedure based on the mail header sending protocol (S502) in detail. The procedures based on the mail header sending protocol (S602, S606, S608) shown in Fig. 6 are also similar to the procedure shown in Fig. 7.

In the wireless terminal A 101, a user produces a mail message by means of the mail producing unit 1004 (S701) and instructs the mail to be sent by the use of the input unit 1003 (S703), and then a series of steps is started. Under the circumstances, it is assumed that the mail server 102 is ready for receiving a mail header from a wireless terminal connected to the mail server 102 (S702).

The wireless terminal A 101 sends a mail header to the mail server 102 through a wireless telephone network connected between the wireless terminal A 101 and the mail server 102 by using the mail header sending unit 1006 (S704). The mail server 102 receives the mail header by using the mail header receiving unit 1103.

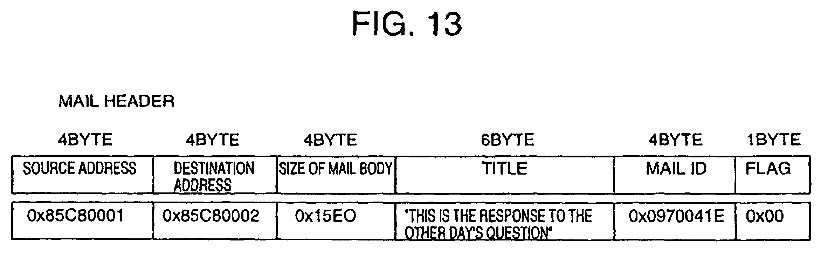

Temporarily referring to Fig. 13, the mail header has a plurality of data fields and at least includes a source address, a destination address, a size of mail body, a title, a mail ID, and a flag arranged in the data fields. The source address (= Ox85c8OOO1(HEX)) is an address for identifying a wireless terminal A 101. The destination address (=0x85c80002(HEX)) is an address which identifies a wireless terminal B 103. The size of a mail body (= Ox15EO(HEX)) is the size of a mail body corresponding to the mail header including these elements. The title (="This is the response to the other day's question"(character strings)) is a title or the first of any characters of a mail body corresponding a mail header including these elements. The mail ID (= 0x970041 E(HEX)) is the ID of this mail header itself and is used for identifying a mail body corresponding to this mail header. The mail ID is a number produced in the wireless terminal A 101, and is not a duplicate of the other mail ID in the wireless terminal A 101. The flag (= OxOO(HEX)) can include the other information, however, in this embodiment, the content of the flag is defined below.

In this embodiment, if the flag in the mail header is OxO1(HEX), it shows that the wireless terminal A 101 requests that the mail body is unconditionally sent to the mail server 102 immediately after the mail header is sent. If the flag in the mail header is OxOO(HEX), it shows that the wireless terminal A 101 entrusts the mail server 102 to determine whether or not the mail body should be sent to the mail server 102.

In Fig. 7, the mail server 102 stores the received mail header in a storage medium in the mail server 102 by using the storage unit 1106 (S705). Next, the mail server 102 analyses the contents of the mail header by using the mail header analysing unit 1105 (S706). If a value of the flag in the mail header is OxO1(HEX), such a situation is referred to as "the flag exists", the mail server 102 skips the following steps (S708 to S710) and immediately requests the wireless terminal A 101 to send a mail body to the mail server 102 (S711).

In the step S707, if the value of the flag in the mail header is OxOO(HEX), i.e. "the flag does not exist", the mail server 102 determines the size of the mail body (S708). If the size of the mail body exceeds 5,000 bytes, the mail server 102 immediately ends the procedure which is based on the mail header sending protocol (S502) (S716). In a similar manner, the wireless terminal A 101 ends the procedure (S715).

If the size of the mail body is smaller than 5,000 bytes, the mail server 102 checks the past access status information pertaining to the wireless terminal B 103 which is designated as a destination (S709).

The access status information is stored in a storage medium in the mail server 102, and automatically updated each time that the access operation is made from each terminal

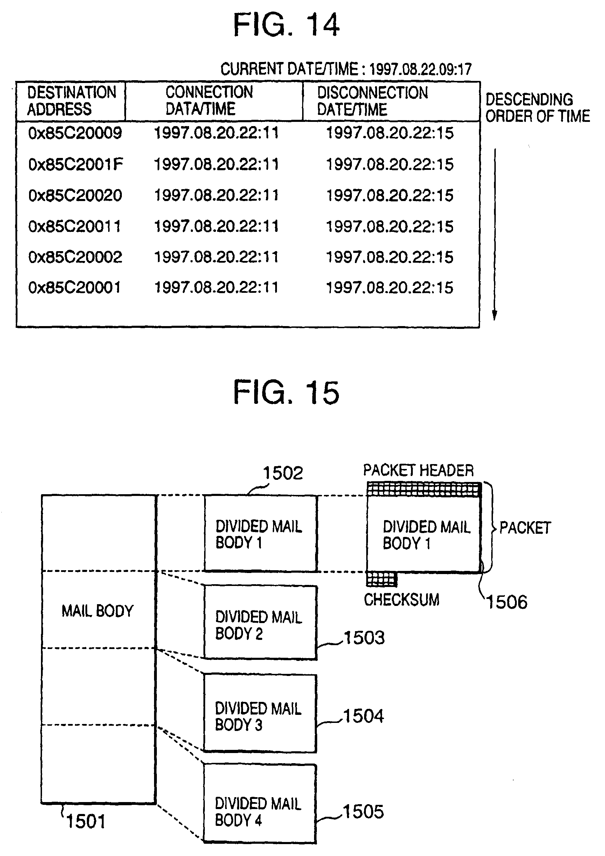

Referring to Fig. 14, there is shown the access status information which is used for the access operation to the mail server 102. As shown in Fig. 14, the access status information generally includes a destination address which is used for identifing a destination terminal, a connection date/time standing for a date/time at which the terminal begins to connect to the mail server 102, and a disconnection date/time standing for a date/time at which the terminal ends the connection. Also, the access status information can be stored in several forms according to a storing unit for storing the information.

In this embodiment, the wireless terminal B 103 (which has an address of 0x85C80002(HEX)) is a destination terminal, and the access status information in Fig. 14, which is representative of the current date/time of "1997. 08. 22. 09:17", is representative of the fact that the wireless terminal B 103 had been connected to the mail server 102 for a period from "1997. 08. 20. 22:11" to '1997. 08. 20. 22:15". Therefore, the wireless terminal B 103 had accessed the mail server 102 for the last two days. When the mail server 102, recognizes this fact, it immediately ends the procedure which is based on the mail header sending the protocol (S502) (S716). Simultaneously, the wireless terminal A 101 also ends the procedure (S715).

When the wireless terminal B 103 has not accessed the mail server 102 for at least the last two days (S710), the mail server 102 determines that the wireless terminal B 103 has suspended the mail sending/receiving operation recently for some reason. In such a situation, the mail server 102 determines that the probability is not high that the wireless terminal B 103 will receive a mail body from the wireless terminal A 101, for example, in two or three days. Therefore, to reduce the load upon the wireless terminal A 101, the mail server 102 moves the mail header from the wireless terminal A 101 to a store.

In Fig. 7, when the mail server 102 requests the wireless terminal A 101 to send the mail body to the mail server 102 (S711), in response to the request, the wireless terminal A 101 sends the mail body to the mail server 102 by using the mail body sending unit 1007 (S712). The mail server 102 requests the mail body (S711), receives the mail body (S712), stores the received mail body in a storage medium (S713), and sends a notification of the completion of reception to the wireless terminal A 101 by using the mail body receiving unit 1104 (S714). Next, the wireless terminal A 101 and the mail server 102 end each procedure based on the mail header sending protocol (S715, S716).

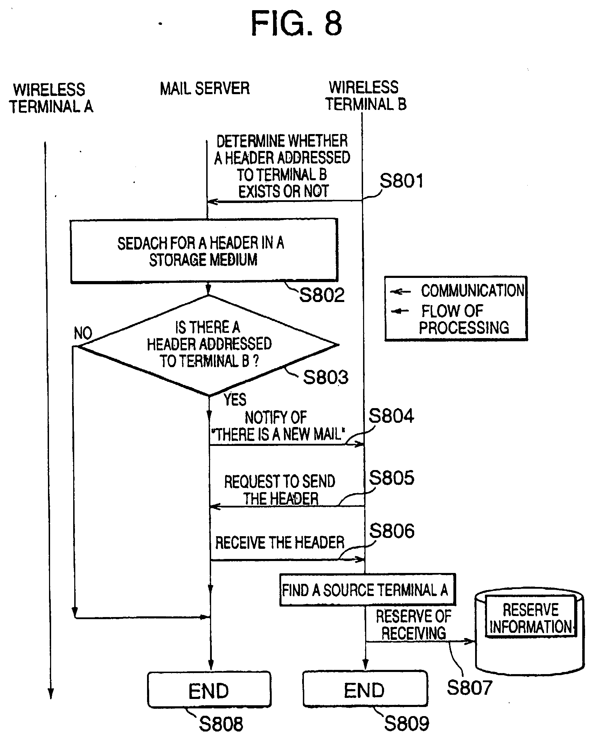

Next, a more detailed description will be given of the procedure based on the mail header receiving protocol (S504) with reference to Fig. 8. Fig. 8 shows the procedure including steps based on the mail header receiving protocol (S504).

In Fig. 8, the wireless terminal B 103 provides a connection to the mail server 102 in response to a trigger signal, such as a timer interrupt signal (S503). The first step of the procedure based on the mail header receiving protocol (S504) is, in the wireless terminal B 103, to request the mail server 102 to determine whether or not there is a mail header addressed to the wireless terminal B 103 in the mail server 102 (S801).

The mail server 102 searches for a mail header addressed to the wireless terminal B 103 in its storage medium (S802) in response to the request from the wireless terminal B 103 (S801). Here, when the existence of a mail header addressed to the wireless terminal B 103 in the storage medium of the mail server 102 is not detected, the mail server 102 immediately ends the procedure which is based on the mail header receiving protocol (S504) (S808). Concurrently, also the wireless terminal B 103 ends the procedure (S809).

If the mail server 102 detects a mail header addressed to the wireless terminal B 103, it then notifies the wireless terminal B 103 of existence of a new mail message (S804). Next, the wireless terminal B 103 requests the mail server 102 to send this mail header to the wireless terminal B 103 (S805). Then, the mail server 102 sends the mail header to the wireless terminal B 103, and the wireless terminal B 103 receives it (S806). Next, the mail server 102 ends the procedure which is based on the mail header receiving protocol (S504). The series of steps of the procedure are carried out in the mail server 102 by using the mail header sending unit 1107.

The wireless terminal B 103 achieves the series of steps (S801 to S806) by using the mail header receiving unit 1205, and refers to the received mail header by using the mail header analysing unit 2207 to find that the source terminal of the mail is the wireless terminal A 101. This also means that there is a mail body corresponding to the mail header in the wireless terminal A 101. The wireless terminal B 103 reserves the reception of the mail body by using the address of the wireless terminal A 101, which is the address of the source terminal (S807). Reserve information is stored in the storage area in the wireless terminal B 103. After the completion of the reservation, the wireless terminal B 103 ends the procedure which is based on the mail header receiving protocol (S504) (S809).

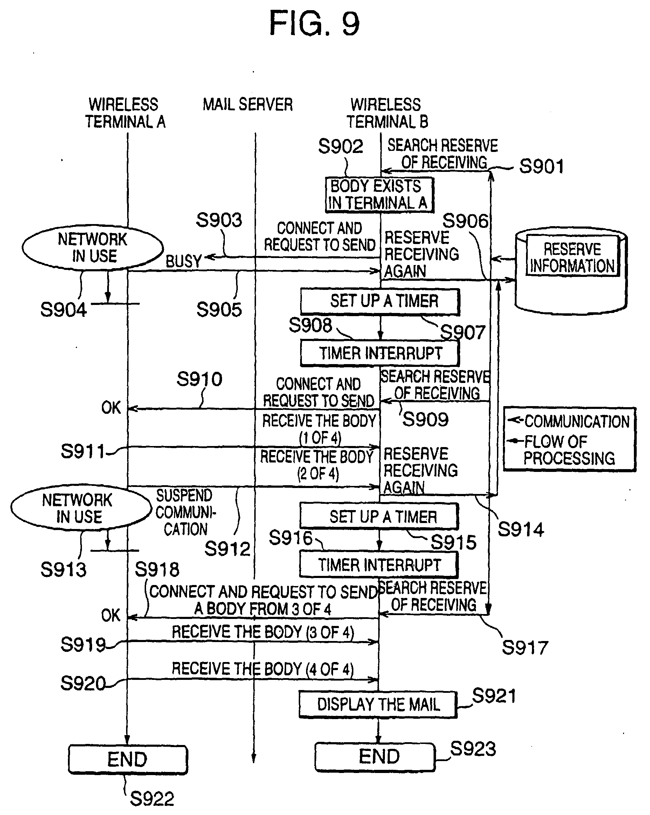

Next, a more detailed description of the procedure based on the mail body receiving protocol (S505) will be made with reference to Fig. 9 which shows the steps included in the procedure which is based on the mail body receiving protocol (S505).

In Fig. 9, it is assumed that the wireless terminal A 101 includes a mail body having an ID which is coincident with an ID (=0x970041E(HEX)) of the mall header addressed to the wireless terminal B 103.

In Fig. 9, when the wireless terminal B 103 detects a mail body addressed to the wireless terminal B 103 in the wireless terminal A 101 by the procedure which is based on the mail header protocol (S504), the wireless terminal B 103 finds that there is a mail body addressed to the wireless terminal B 103 in the mail server 102, and it finds that there is a timer interrupt in the wireless terminal B 103, or it receives user's instructions, searches the reserve information and determines whether a receiving reserve exists or not (S901) in the information.

The wireless terminal B 103, when it determines that a receiving reserve exists and the mail body exists in the wireless terminal A 101, immediately makes a connection to the wireless terminal A 101 and requests the wireless terminal A 101 to send the mail body to the wireless terminal B 103 (S903). At this point, when, for example, a user speaks over a wireless network by using the wireless terminal A 101 (S904), the connection between the wireless terminal A 101 and the wireless terminal B 103 is caused to fail (S905). The wireless network can fail to be connected when a user who uses the wireless terminal A 101 is using the network, but the wireless terminal A 101 is then automatically connected to another mail server, or the wireless terminal A 101 is located out of the area where it can send/receive a radio wave.

The wireless terminal B 103, when it determines the failure of the connection to the wireless network, reserves the situation for receiving (S906) with the determined reserve for receiving (S901). After the reservation, the wireless terminal B 103 sets up a timer 1212 (S907) so that the wireless terminal B 108 determines the existence of the reservation for receiving for a certain time (for example, for once every hour) (S909). Next, the wireless terminal B 103 can pause in its operation thereby saving battery power.

The wireless terminal B 103, when it is again activated by a timer interrupt (S908), firstly determines the reservation for receiving (S909). The wireless terminal B 103 refers to the receiving reservation, makes a connection to the wireless terminal A 101, and requests the wireless terminal A 101 to send the mail body to the wireless terminal B 103 (S909 to S910) by means of steps similar to the steps S901 to S903.

The wireless terminal A 101, when it receives the request from the wireless terminal B 103, searches a mail body corresponding to a mail ID (=0x0970041E(HEX)) stored in the wireless terminal A 101 and sends it to the wireless terminal B 103 (S911), which is connected to the wireless terminal A 101 at this point.

In this embodiment, because the size of the mail body (= OxI5EO(HEX) = 5,600 bytes) exceeds a predetermined size of a unit for sending a mail body (for example, = Ox5DC(HEX) 1,500 bytes), the wireless terminal A 101 divides the mail body and sends the divided parts. In this embodiment, as shown in Fig. 15, the wireless terminal A 101 divides the mail body 1501 (its size =5,600 bytes) into 4 parts or pieces, each piece having a unit size (=1,500 bytes). The wireless terminal A 101 further appends a packet header for sending and a corresponding check-sum to each divided piece of the mail body (1502 to 1505) and sends it to the wireless terminal B103. For example, at first the divided mail body 1 (1502) is sent (S911), next the divided mail body 2 (1503) is sent (S912), next the divided mail body 3 (1504) is sent (S918), and lastly the divided mail body 4 (1505) is sent (S919). The packet header need not include address information, however, it may include the mail ID, the number of the divided mail body, and information representative of what area in the whole mail body the divided mail body corresponds to, since this is convenient for classifing the mail body after the wireless terminal B 103 receives it.

Here, the receiving quality monitoring unit 1211 of the wireless terminal B 103 refers to the received mail body packet 1506, calculates a check-sum from the divided mail body 1 (1502), and compares it with a check-sum in the mail body packet 1506. The wireless terminal B 103, when both the check-sums are not identical with each other, requests the wireless terminal A 101 to send the mail body packet again to the wireless terminal B 103, and receives the mail body from the wireless terminal A 101 again.

In Fig. 9, the wireless network used for the wireless terminal A101 can be used for other purposes than communication, after the completion of sending (S912) of the divided mail body 2 (1503). At this point, in such a situation connection for the communication may be suspended. The situation in which the communication and the connection for the communication are suspended can be similar to that in which the connection of the wireless network has failed, as described above.

When the wireless terminal B 103 determines that the communication and the connection for the communication have been suspended, it reserves the receiving situation again (S914 to S915) in a manner similar to the above steps (S906 and S907). However, information representative of the fact that the divided mail body 1 and 2 (1502, 1503) have been received should be appended to the reservation for reception in steps S906 and S907 (S914), because the divided mail body 1 and 2 (1502, 1503) have already been received by the wireless terminal B 103 among the whole mail body 1501.

The wireless terminal B 103 which is activated by the timer interrupt (S916) again, firstly determines that the reception has been reserved (S917) and detects that there are reception reserves and that the wireless terminal B 103 had received the divided mail bodies 1 and 2 (1502, 1503). Therefore, the wireless terminal B 103 is connected to the wireless terminal A 101 and the wireless terminal A 101 is requested to send further divided mail bodies, except for the divided mail bodies 1 and 2 (1502, 1503) which are of a part of the mail body 1501 (S918).

Responsive to the request, the wireless terminal A 101 sends to the wireless terminal B 103 the divided mail bodies 3 and 4 (1504, 1505) (S919, S920). In response to the sending by the wireless terminal A 101, the wireless terminal B 103 receives the divided mail bodies 3 and 4 (1504, 1505) (S919, S920). When all of the divided mail bodies have been received, the wireless terminal A 101 ends the procedure based on the mail body receiving protocol (S505) (S922).

The wireless terminal B 103 may reconstruct the received mail bodies 1 to 4 (1502 to 1505) to display them as a single mail body (1501) (S921) by using the mail displaying unit 1204.

When the series of steps in the above description have been completed, the wireless terminal B 103 ends the procedure based on the mail body receiving protocol (S505) (S923). However, as far as the wireless terminal B 103 reserves reception, and sets up the timer 1212, the other operations can be made by the wireless terminal B 103. For example, after the reservation for receiving again (S906) and the setting of the timer 1212 (S907), and before the timer interrupt (S908), the wireless terminal B 103 can activate the procedure based on the mail header receiving protocol (S504). In this case, if there is a new mail header in the mail server 102, the number of the reservation for receiving in the reservation information is incremented by one. When the procedure based on the mail body receiving protocol (S505) is activated by the timer interrupt (S908), the wireless terminal B 103 finds that the number of the reservation for receiving is incremented (S909). Then receiving the new mail can be done with no problem by processing mails corresponding to the incremented reservation for receiving one by one.

A description will now be made of a further wireless data transfer system illustrative of the present invention. In the particular wireless data transfer system, the wireless terminal B 103 carries out a procedure based on a mail body receiving protocol (S505) and is able to receive a plurality of mail bodies from a single source terminal in a single connection to a wireless network and to reduce the number of connections to the network by reordering a plurality of reservations for reception by using a source address as a key, when the wireless terminal B 103 determines the reservation information (S901, S909, S917) and, as a result, it is found that there are a plurality of reservations for reception.

In another arrangement illustrative of the invention a wireless data transfer system has the wireless terminal B 103, and employs a procedure based on the mail body receiving protocol (S505) employed in the previously proposed arrangement illustrative of the invention. When the wireless terminal B 103 of this further arrangement intends to make a connection to the wireless terminal A 101 designated by a source address (S903, S910, S918), it determines whether or not there is sufficient receiving field intensity to use a wireless network by using the receiving quality monitoring unit 1211 before the connection is made. The situation in which there is sufficient field intensity may be referred to as "being in a communication area". Next, the wireless terminal B 103, when it determines that the wireless terminal B 103 is in a communication area, automatically makes the connection to the wireless terminal A 101.

The receiving field intensity is determined not to be enough, when the intensity level of a radio wave which is received and monitored at all times falls below the predetermined threshold value. Any conventional technology for measuring the intensity level may be used.

In another arrangement illustrative of the invention a wireless data transfer system has the wireless terminal B 103, and employs a procedure based on the mail body receiving protocol (S505) described with reference to the previous arrangements illustrative of the invention. When it is intended to make a connection to the wireless terminal A 101 designated by a source address (S903, S910, S918), it is determined whether or not its own battery has sufficient power remaining for use in the wireless network by using the receiving quality monitoring unit 1211 before the connection is made. Next, the wireless terminal B 103, when it is determined that the remainder of its battery power is sufficient, is automatically connected to the wireless terminal A 101.

The remainder of the battery power for the wireless terminal B 103 is determined not to be enough, when voltage of the battery which, is monitored at all times, falls below a predetermined threshold value. Any conventional technology for measuring the voltage of the battery may be used.

In yet another arrangement illustrative of the invention a wireless data transfer system has the wireless terminal B 103, and employs a procedure based on the mail body receiving protocol (S505) described with reference to the previous arrangements illustrative of the invention, during the receipt of a mail body (S911, S912, S918, S919), and determines whether or not the receiving quality has been degraded in receiving the mail body by using the receiving quality monitoring unit 1211. Next, the wireless terminal B 103, when it is determined that the receiving quality has been degraded, automatically suspends the communication and connection in which the communication has been made, and immediately makes a reservation for receiving again (S906, S914) and sets up the timer (S907, S915). The wireless terminal B 103, when the timer interrupt (S908, S916) occurs, automatically makes a connection to the wireless terminal A 101.

Here, the receiving quality monitoring unit 1211 refers to the received mail body packet 1506, calculates a check-sum from the divided mail body 1 (1502), and compares the check-sum with a check-sum from the mail body packet 1506. When they are not identical, the receiving quality monitoring unit 1211 requests the wireless terminal A 101 to send the mail body packet again to the wireless terminal B 103, and receives the mail body packet again from the wireless terminal A 101. In the above procedure, the receiving quality monitoring unit 1211 determines that the receiving quality of the mail body packet is not sufficient, when, for example, it occurs that the check-sums are not identical five times successively. Any conventional technologies for calculating a check-sum may be used.

As described above, the central apparatus sends/receives only attribution information pertaining to the digital data. Furthermore, the central apparatus can reduce the communication costs wasted on receiving digital data which is unnecessary for a user receiving digital data, by automatically suspending sending/receiving data when the radio field intensity becomes not stable and, after that, automatically restarting the sending/receiving when the radio field intensity becomes stable. The central apparatus can also reduce the amount of resources in a wireless transmission network occupied by the whole system.

The central apparatus is able to reduce the amount of storage resources which it employs by sending/receiving only the attribution information pertaining to digital data.

Further, in the arrangement described, communication can be automatically suspended according to the degradation of the quality of a wireless network, or a request for a network from a user, and automatically restarted when reliable data transfer is guaranteed. As a result, the battery power resource of the wireless terminal can be saved.

Still further, in the arrangement described, the status of the connection between a central apparatus and a wireless terminal, which is designated for the destination of digital data, is monitored and when a wireless terminal which has not been connected for any given period is designated as the destination, the data is automatically stored in a conventional manner in the central apparatus. As a result, the piling-up of the digital data which has not been sent in the wireless terminal which sends the digital data, is avoided.

It will be understood that, although particular arrangements illustrative of the invention have been described by way of example, variations and modifications thereof, as well as other arrangements may be conceived within the scope of the appended claims.

## Claims

1. A wireless data transfer method of sending/receiving digital data between a source terminal (101) and a destination terminal (103) via a central apparatus (102) by using a wireless transmission network, the digital data being divided into a header and a remaining part, including the steps of
sending the header from the source terminal (101) to the central apparatus (102), and
receiving the digital data at the destination terminal (103) from the source terminal (101) by monitoring only the header in the central apparatus (102).

2. A method as claimed in claim 1, wherein the header includes attribution information for the digital data.

3. A method as claimed in claim 2, wherein the attribution information includes an ID identifying the source terminal (101), the size of the digital data, the title of the digital data, and an ID identifying the digital data.

4. A method as claimed in claim 3, further including the steps of
storing in the central apparatus (102) the digital data from the source terminal (101) on predetermined conditions and supplying to the destination terminal (103) the digital data from the central apparatus (102).

5. A method as claimed in claim 4, including the step of
storing in the central apparatus (102) the digital data when the size of the digital data is lower than a predetermined value and/or the destination terminal (103) has not been accessed for a given period of time.

6. A method as claimed in claim 4, including the step of
storing in the destination terminal (103) a reservation for receiving the necessary digital data before the destination terminal (103) receives the digital data from the source terminal (101) and receives the digital data based on the reservation for receipt of the data.

7. A method as claimed in claim 6, including the step of
receiving at the destination terminal (103) digital data from source terminals (101) collectively and at every source terminal (101) by sorting the data reserved for receiving.

8. A method as claimed in claim 6, including the step of
automatically receiving at the destination terminal (103) the remaining digital data after a given period of time by having stored the data reserved for subsequent receipt when the receiving of the digital data from the source terminal (101) has been suspended.

9. A method as claimed in claim 1, including the step of
supplying from the source terminal (101) the digital data to the destination terminal (103) in the form of divided data (1502 - 1506), when the destination terminal (103) receives the digital data from the source terminal (101) and the size of the digital data to be received exceeds a predetermined value.

10. A method as claimed in claim 1, including the step of
suspending the receipt of the digital data, when the destination terminal (103) is to receive the digital data from the source terminal (101), if a predetermined condition with respect to the receiving quality is not satisfied.

11. A method as claimed in claim 10, wherein the condition is that the power of a battery at the destination terminal (103) is not enough.

12. A method as claimed in claim 10, wherein the condition is that the receiving field intensity at the destination terminal (103) is not sufficiently high for the radio network to be used.

13. A method as claimed in claim 10, wherein the condition is that a check-sum originally appended to the digital data and a check-sum derived from the received digital data are not identical for a predetermined number of times successively.

14. A wireless data transfer system for sending/receiving digital data between terminals via a central apparatus (102) by using a wireless transmission network, the digital data being divided into a header and a remaining part, the system including
a source terminal (101) which sends to the central apparatus (102) the header, and
a destination terminal (103) which receives the digital data from the source terminal (101) when the digital data is determined to be needed by monitoring only the header in the central apparatus (102).

15. A computer readable medium which stores a program operable in a wireless data transfer system for sending/receiving digital data between terminals via a central apparatus (102) by using a wireless transmission network, the digital data being divided into a header and a remaining part, the program including the steps of
sending the header from a source terminal (101) to the central apparatus (102), and
receiving the digital data at a destination terminal (103) from the source terminal (101) by monitoring only the header in the central apparatus (102).
